(19) Europäisches Patentamt
European Patent Office
Office européen des brevets

(11) **EP 1 123 492 B1**

(12) **EUROPÄISCHE PATENTSCHRIFT**

(45) Veröffentlichungstag und Bekanntmachung des Hinweises auf die Patenterteilung:
**30.03.2005 Patentblatt 2005/13**

(21) Anmeldenummer: **99948649.1**

(22) Anmeldetag: **17.07.1999**

(51) Int Cl.7: **G01L 1/22**

(86) Internationale Anmeldenummer:
**PCT/DE1999/002217**

(87) Internationale Veröffentlichungsnummer:
**WO 2000/023777 (27.04.2000 Gazette 2000/17)**

(54) **SCHALTUNGSANORDNUNG ZUR KOMPENSATION DER TEMPERTURNICHTLINEARITÄT DER KENNLINIEN VON IN EINER BRÜCKENSCHALTUNG GESCHALTETER PIEZORESISTIVER MESSWIDERSTÄNDE**

CIRCUIT CONFIGURATION FOR COMPENSATING THE TEMPERATURE NON-LINEARITY OF THE CHARACTERISTIC CURVES OF THE PIEZORESISTIVE MEASURING RESISTORS CONNECTED IN A BRIDGE CIRCUIT

CIRCUIT POUR LA COMPENSATION DE LA NON-LINEARITE DE TEMPERATURE DES CARACTERISTIQUES DE RESISTANCES DE MESURE PIEZORESISTIVES MONTEES EN CIRCUIT EN PONT

(84) Benannte Vertragsstaaten:
**DE FR IT**

(30) Priorität: **21.10.1998 DE 19848362**

(43) Veröffentlichungstag der Anmeldung:
**16.08.2001 Patentblatt 2001/33**

(73) Patentinhaber: **ROBERT BOSCH GMBH**
**70442 Stuttgart (DE)**

(72) Erfinder:
• **MUCHOW, Joerg**
  **D-72124 Pliezhausen (DE)**
• **HORN, Joachim**
  **D-72762 Reutlingen (DE)**
• **SCHATZ, Oliver**
  **D-72760 Reutlingen (DE)**

(56) Entgegenhaltungen:
DE-A- 2 839 617        US-A- 3 046 782
US-A- 4 173 148        US-A- 5 522 266

**Beschreibung**

Die Erfindung betrifft eine Schaltungsanordnung zur gezielten Verringerung beziehungsweise Kompensation der Temperaturnichtlinearität der Kennlinien von in einer Brückenschaltung geschalteter piezoresistiver Meßwiderstände mit den im Oberbegriff des Anspruchs 1 genannten Merkmalen.

Stand der Technik

Es ist bekannt, beispielsweise bei der Messung von Drücken, mikromechanische Drucksensoren einzusetzen, die eine aus einem piezoresistiven Material bestehende Meßmembran aufweisen. Um ein Ausgangssignal des Drucksensors zu erhalten, ist bekannt, die Meßmembran mit in einer Brückenschaltung (Wheatstone-Brücke) geschalteten piezoresistiven Widerständen zu versehen, mittels denen ein an der Meßmembran anliegender Druck in ein elektrisches Ausgangssignal gewandelt werden kann.

Die Brückenwiderstände setzen sich jeweils aus Teilwiderständen zusammen, die sich durch den gewählten Aufbau des Drucksensors ergeben. Dieser besitzt üblicherweise eine aus Silizium bestehende, beispielsweise n-dotierte Messmembran, in die die eigentlichen Messwiderstände als Diffusion, beispielsweise als p- - dotierte Bereiche (Basisdiffusion), angelegt werden. Zum Anschließen der Messwiderstände sind Zuleitungen vorgesehen. Die Zuleitungen können als Kombination von niederohmigen Diffusionsgebieten und metallischen Leiterbahnen aufgebaut sein. Der diffundierte Zuleitungswiderstand kann beispielsweise p+-Dotierung gebildet werden. Der metallische Zuleitungswiderstand kann beispielsweise aus Aluminium bestehen. Die Brückenwiderstände ergeben sich somit aus der Summe von jeweils 3 Teilwiderständen, nämlich dem eigentlichen piezoresistiven Widerstand und den diffundierten bzw. metallischen Zuleitungswiderständen. Jeder dieser Teilwiderstände besitzt einen unterschiedlichen, nicht linearen Temperaturverlauf.

Ein Drucksensor, der mittels einer druckabhängigen Schicht auf einer Membran unter Verwendung einer Wheatstone-Schaltung eine Druckgröße erzeugt, ist in der US 5,522,266 A beschrieben.

Aus der US 4,173,148 A ist ein Drucksensor aus einem Halbleitermaterial mit einer Brückenschaltung aus Widerständen bekannt, bei der Elemente einer Schaltungsanordnung zur Temperaturkompensation bei der Aufnahme einer Druckgröße verwendet wird. Dabei werden erste Elemente dazu verwendet, die temperaturabhängigen Widerstandskoeffizienten auf Null einzuregeln, solange kein Druck auf die Brückenschaltung wirkt. Weiterhin werden zweite Elemente verwendet, die verhindern, dass der Nullpunkt der Brückenspannung mit der Temperatur driftet. Dabei wird zur Erfassung der Druckgröße die Brückenspannung an zwei Ausgangsklemmen der mit einer Gleichspannung betriebenen Brückenschaltung abgenommen.

Eine weitere Vorrichtung zur Erfassung einer Druckgröße ist aus der Schrift US 3,046,782 A bekannt. In dieser Schrift wird ein Signalgeber beschrieben, der durch eine spezielle Verwendung unterschiedlicher temperaturabhängiger Elemente ein temperaturunabhängiges Signal erzeugt.

Vorteile der Erfindung

Die erfindungsgemäße Schaltungsanordnung mit den in Anspruch 1 genannten Merkmalen bietet dem gegenüber den Vorteil, dass in einfacher Weise eine gezielte Verringerung bzw. Kompensation der Temperatur Nichtlinearität der Kennlinie einer piezoresistiven, Messwiderstände aufweisenden Brückenschaltung zu erreichen ist. Dadurch, dass die Teilwiderstände jedes Brückenwiderstandes anhand derer bekannten, nichtlinearen Temperaturkennlinien ausgewählt, das heißt dimensioniert werden, lassen sich definierte unterschiedliche Kennlinienverläufe über der Temperatur und/oder dem Druck (abhängig von mechanischen Spannungen) realisieren, so daß eine nichtlineare Temperaturkennlinie des Druckwandlers zum Beispiel aufgrund von Bimetalleffekten oder Nichtlinearitäten der einzelnen Widerstandselemente oder einer temperaturabhängigen Brückenfußspannung kompensierbar ist. Insbesondere durch die Wahl der Verhältnisse der Widerstandswerte der einzelnen Teilwiderstände innerhalb des Gesamtwiderstandswertes der Brückenwiderstände läßt sich der nichtlineare Kennlinienverlauf der einzelnen Brückenwiderstände kompensieren, da bei der Auswahl der Widerstandswerte auf deren bekanntes nichtlineares Verhalten bei Temperatur und/oder Druck Einfluß genommen werden kann. Insbesondere lassen sich für die Teilwiderstände, die tatsächlich einem unterschiedlichen Einfluß unterliegen, da das Temperaturverhalten und/oder das Druckverhalten auf die einzelnen Teilwiderstände des Brückenwiderstandes unterschiedlichen Einfluß ausübt, einzeln die optimalen Widerstandswerte bestimmen.

In bevorzugter Ausgestaltung der Erfindung ist vorgesehen, daß die Widerstandswerte der Teilwiderstände der Brückenwiderstände so ausgewählt werden, daß innerhalb eines Brückenwiderstandes Teilwiderstände mit einer Temperaturkennlinie mit umgekehrten Vorzeichen berücksichtigt werden. Hierdurch lassen sich infolge einer Temperatureinwirkung auftretende Nichtlinearitäten bereits innerhalb des Brückenwiderstandes kompensieren, da die Teilwiderstände einen entsprechenden positiven oder negativen Kennlinienverlauf aufweisen, die sich durch die Integration in einem Brückenwiderstand überlagern.

Weitere bevorzugte Ausgestaltungen der Erfindung ergeben sich aus den übrigen, in den Unteransprüchen genannten Merkmalen.

Zeichnungen

Die Erfindung wird nachfolgend in einem Ausführungsbeispiel anhand der zugehörigen Zeichnungen näher erläutert. Es zeigen:

Figur 1 ein Schaltbild einer Brückenschaltung;

Figuren 2a und 2b Temperaturverläufe eines Ausgangssignales der Brückenschaltung;

Figur 3 verschiedene druckabhängige Temperaturkennlinien der Brückenschaltung und

Figur 4 eine schematische Teilansicht einer Meßbrücke.

Beschreibung des Ausführungsbeispiels

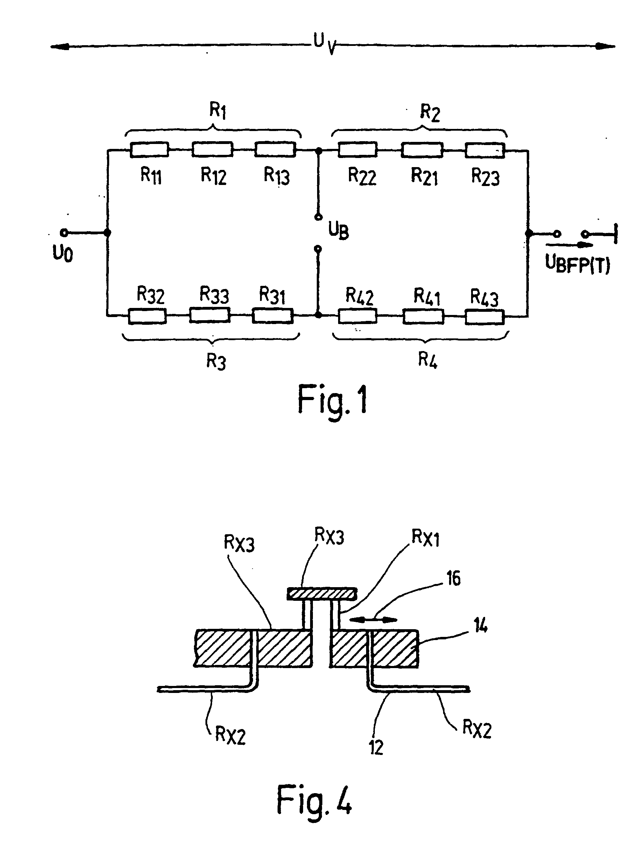

Figur 1 zeigt eine Schaltungsanordnung 10 einer Brückenschaltung der Widerstände $R_1$, $R_2$, $R_3$ und $R_4$ (Widerstände $R_x$ mit x = 1, 2, 3, 4). Die Widerstände $R_1$ bis $R_4$ sind beispielsweise die Brückenwiderstände eines mikromechanischen Drucksensors. Aufbau und Wirkungsweise derartiger mikromechanischer Drucksensoren, bei denen die Schaltungsanordnung 10 in einer unter Einwirkung eines Druckes auslenkbaren Siliziummembran beziehungsweise im Randbereich der Membran strukturiert sind, sind allgemein bekannt, so daß im Rahmen der vorliegenden Beschreibung hierauf nicht näher eingegangen werden soll.

Jeder der Widerstände $R_1$ bis $R_4$ setzt sich aus Teilwiderständen $R_{x1}$, $R_{x2}$ und $R_{x3}$ zusammen, wobei die Teilwiderstände $R_{x1}$ piezoresistive Meßwiderstände eines in die Siliziummembran eindiffundierten Widerstandsbereiches ($p^-$-dotiert), die Teilwiderstände $R_{x2}$ metallische Zuleitungswiderstände, beispielsweise Aluminiumleitungen, sind, und die Teilwiderstände $R_{x3}$ diffundierte Zuleitungswiderstände ($p^+$-dotiert) sind. Für die Auslegung der Schaltungsanordnung 10 gilt also:

$$R_x = R_{x1} + R_{x2} + R_{x3} \qquad (x = 1 \; bis \; 4).$$

Die Spannungsgleichung der Schaltungsanordnung 10 lautet bekanntermaßen:

$$U_B = \frac{R_1 \cdot R_4 - R_2 \cdot R_3}{(R_1 + R_2) \cdot (R_3 + R_4)} \cdot U_V.$$

wobei $U_V$ die Versorgungsspannung und $U_B$ die Brückenspannung der Schaltungsanordnung 10 ist.

Für die Versorgungsspannung $U_V$ gilt, daß diese temperaturabhängig ist. Dies ergibt sich aus der Beziehung:

$$U_V = U_0 - U_{BFP}(T),$$

wobei $U_0$ eine Brückenversorgungsspannung und $U_{BFP}(T)$ eine temperaturabhängige Brückenfußpunktspannung ist. Für die Brückenfußpunktspannung gilt:

$$U_{BFP}(T) = U_{BFP_0} - TK_{BFP} \cdot \Delta T.$$

Hieraus resultiert für die Brückenspannung $U_B$:

$$U_B(\Delta T) = \frac{R_1(\Delta T)\cdot R_4(\Delta T) - R_2(\Delta T)\cdot R_3(\Delta T)}{(R_1(\Delta T) + R_2(\Delta T))\cdot(R_3(\Delta T) + R_4(\Delta T))}\Bigg|$$

$$\cdot\left[U_0 - U_{BFP0} + TK_{BFP}\,\Delta T\right]\cdot$$

$$p = const.$$

Hieraus erfolgt näherungsweise für eine Betrachtung bei einem konstanten Druck p:

$$U_B(\Delta T) \approx U_B\,|\cdot[1 - TK_{Br}\cdot\Delta T]$$

$$p = const.$$

wobei der Term $1 - TK_{Br}\cdot\Delta T$ die Temperaturabhängigkeit der Brückenspannung in linearer Näherung beschreibt. Hieraus resultiert:

$$U_B(\Delta T) \approx \underbrace{U_B|\cdot(U_0 - U_{BFP0})}_{\neq f(\Delta T)} \cdot \left[1 + \underbrace{\frac{TK_{BFP}}{U_0 - U_{BFP0}}}_{a}\Delta T\right] \cdot \left[1 - \underbrace{TK_{Br}}_{b}\Delta T\right]\cdot$$

Im Ergebnis gilt anhand der Beziehung

$$[1 + a\,\Delta T]\cdot[1 - b\,\Delta T] = 1 + [a-b]\,\Delta T - ab\Delta T^2$$

daß, selbst wenn a = b ist und lineare Näherungen für $U_{BFP}\,\Delta t$ und die Brückenspannung bei fester Versorgungsspannung benutzt werden, ein quadratischer Term $ab\Delta T^2$ verbleibt, der die Temperaturnichtlinearität der Brückenspannung $U_B$ bestimmt. Diese Temperaturabhängigkeit wird bei der nachfolgenden Betrachtung der Bestimmung der Teilwiderstände der Brückenschaltung mit berücksichtigt.

Jeder der Teilwiderstände $R_{xx}$ besitzt unterschiedliche lineare und quadratische Temperaturkoeffizienten. Hierbei wird unterstellt, daß sämtliche Teilwiderstände $R_{xx}$ im wesentlichen mit der gleichen Umgebungstemperatur am bestimmungsgemäßen Einsatzort des die Schaltungsanordnung 10 aufweisenden Drucksensors beaufschlagt sind.

Die Zuleitungswiderstände $R_{x2}$ und $R_{x3}$ hängen nur von der Temperatur T ab, nicht aber vom anliegenden Druck p. Somit gilt für den Temperaturverlauf der Teilwiderstände $R_{x2}$ und $R_{x3}$:

$$R = R_0(1 + \Delta T\cdot TKR + \Delta T^2\cdot TKR^2),$$

wobei $R_0$ der Grundwiderstand bei $T = T_0$ ist, $\Delta T = T - T_0$, TKR der lineare Temperaturkoeffizient und $TKR^2$ der quadratische Temperaturkoeffizient.

Der piezoresistive Meßwiderstand $R_{x1}$ hängt ab von der mechanischen Spannung $\delta_x$ am Ort des Meßwider-

standes und der Temperatur T.

$$R_{x1} = f(\delta_x, T).$$

Auch hierbei wird unterstellt, daß alle vier Meßwiderstände $R_{x1}$ dieselbe Temperatur haben. Die mechanische Spannung $\delta_x$ am Ort des Meßwiderstandes ist. ihrerseits eine Funktion des Druckes p und der Temperatur T, so daß gilt:

$$\delta_x = \delta_x(p, T).$$

Nimmt man eine lineare Druckabhängigkeit an, sowie eine intrinsische mechanische Spannung $\delta_0$, die der Einfachheit halber ohne Temperaturkoeffizienten modelliert wird, so gilt:

$$\delta_x = const \cdot p + \delta_0 = \delta_x(p).$$

Die Temperaturabhängigkeit des Meßwiderstandes $R_{x1}$ resultiert im wesentlichen aus der Temperaturabhängigkeit des piezoresistiven Koppelfaktor $\pi(T)$. Damit kann die Druck- und Temperaturabhängigkeit der piezoresistiven Meßwiderstände im einfachsten Fall durch folgende Formel ausgedrückt werden:

$$R_{x1} = R_{x10}\left[1 + \underbrace{\left[\pi(T) \cdot \delta_x(p)\right]}_{I} + \underbrace{TKR_{x1} \cdot \Delta T + TKR_{x1}^2 \cdot \Delta T^2}_{II}\right]$$

Term I beschreibt die Änderung des Widerstandswertes durch einen anliegenden Druck p auf Basis des temperaturabhängigen piezoresistiven Effektes. Term II beschreibt die Änderung des Widerstandswertes in Abhängigkeit von der Temperatur.

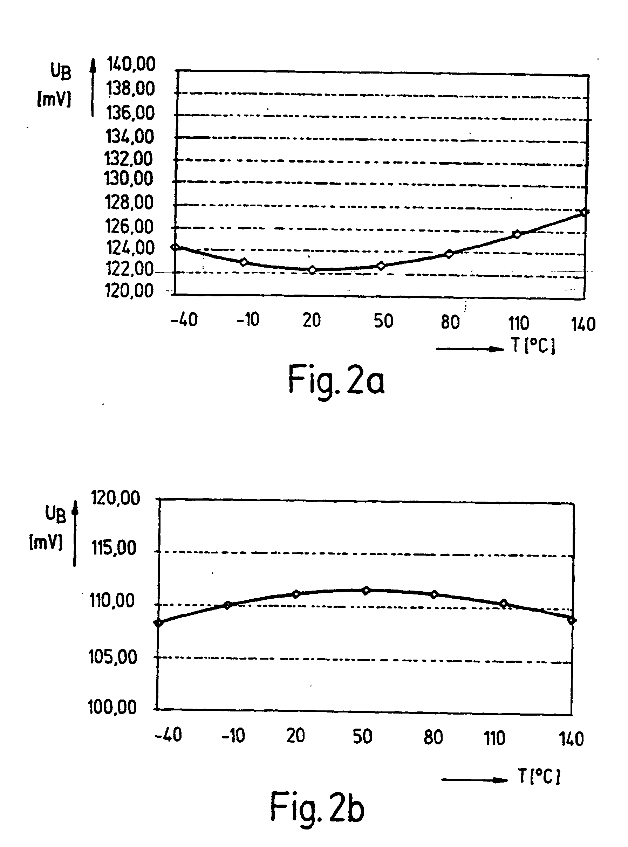

In den Figuren 2a und 2b sind hierzu beispielhaft zwei Kennlinien wiedergegeben, die den Verlauf der Brückenspannung $U_B$ über der Temperatur bei unterschiedlichen nichtlinearen Kennlinienverläufen zeigen. Es soll eine durch Änderung der Symmetrie des Widerstandsnetzwerkes hervorgerufene Änderung der Nichtlinearität verdeutlicht werden. Gemäß Figur 2a besitzt die Kennlinie im Temperaturbereich von circa 2 °C ein Minimum, während die Kennlinie gemäß Figur 2b im Temperaturbereich von circa 50 °C ein Maximum aufweist. Der Verlauf der Kennlinie der Brückenspannung $U_B$ über der Temperatur T ist abhängig von den unterschiedlichen linearen und quadratischen Temperaturkoeffizienten der in der Brückenschaltung eingesetzten Widerstände $R_1$ bis $R_4$, die - wie anhand von
Figur 1 verdeutlicht - sich jeweils aus den Teilwiderständen $R_{x1}$ bis $R_{x3}$ zusammensetzen. Somit gilt für den Temperaturverlauf des Widerstandes R:

$$R = R_0 (1 + \Delta T \cdot TKR + \Delta T^2 \cdot TKR^2),$$

wobei $R_0$ der Grundwiderstand ist, TKR der lineare Widerstandskoeffizient und $TKR^2$ der quadratische Widerstandskoeffizient.
Entsprechend dieser Beziehung läßt sich für die Widerstände $R_1$ bis $R_4$ der Schaltungsanordnung 10 ableiten:

$$R_x(T) = R_{x10}\left[1+\left[\underbrace{\pi(T)\cdot\delta_x(p)}_{I}\right]+\underbrace{TKR_{x1}\cdot\Delta T+TKR_{x1}^2\cdot\Delta T^2}_{II}\right]+$$

$$R_{x20}\left(1+\Delta T\cdot TKR_{x2}+\Delta T^2\cdot TKR_{x2}^2\right)+$$

$$R_{x30}\left(1+\Delta T\cdot TKR_{x3}+\Delta T^2\cdot TKR_{x3}^2\right).$$

Es wird deutlich, daß jeder der Teilwiderstände $R_{xx}$ entsprechend seines linearen und quadratischen Temperaturkoeffizienten auf den nichtlinearen Temperaturkennlinienverlauf der Brückenspannung $U_B$ Einfluß hat.

Um nunmehr die nichtlinearen Kennlinien der Schaltungsanordnung 10 zu kompensieren, erfolgt die Aufteilung der Widerstandswerte der Teilwiderstände $R_{xx}$ so, daß diese ein unterschiedliches Temperaturkennlinienverhalten aufweisen. Beispielsweise wird innerhalb des erforderlichen Gesamtwiderstandes der einzelnen Brückenwiderstände $R_1$ bis $R_4$ der Anteil der Teilwiderstände $R_{x1}$, $R_{x2}$ beziehungsweise $R_{x3}$ so zueinander ausgewählt, daß beispielsweise der Widerstandswert $R_{x1}$ eine positive Temperaturkennlinie, der Widerstandswert $R_{x2}$ eine negative Temperaturkennlinie aufweist. Da die linearen und quadratischen Temperaturkoeffizienten für unterschiedliche Größenordnungen der Widerstände unterschiedlich sind, kann so - ohne den Gesamtwert der Brückenwiderstände $R_1$ bis $R_4$ zu verändern - durch Variation der Teilwiderstände $R_{x1}$ bis $R_{x3}$ mit unterschiedlichem Temperaturkennlinienverlauf gezielt eine Temperaturdrift der Schaltungsanordnung 10 eingestellt werden. Insbesondere dadurch, daß Teilwiderstände mit positiven und negativem Temperaturkennlinienverlauf in die Gesamtwiderstände $R_1$ bis $R_4$ integriert werden, wird in der Summe der Widerstandswerte eine Kompensation einer Temperaturdrift erreicht, so daß zusätzliche aktive und/oder passive Schaltungsbestandteile nicht notwendig sind.

Ferner läßt sich durch gezielte Dimensionierung der Teilwiderstände $R_{xx}$ neben einer Kompensation des nichtlinearen Temperaturverlaufes ein Piezoeffekt der Schaltungsanordnung 10 kompensieren. Bei Anliegen einer mechanischen Spannung (Druck) an die die Schaltungsanordnung 10 aufweisende Membran werden die Meßwiderstände $R_{x1}$ beeinflußt, während die Zuleitungswiderstände $R_{x2}$ und $R_{x3}$ hiervon unbeeinflußt sind.

Hierdurch stellt sich eine nichtlineare Verstimmung der Brückenspannung $U_B$ über dem Druck ein. Diese nichtlineare Verstimmung über dem Druck ist zusätzlich durch den bereits erläuterten nichtlinearen Temperaturkennlinienverlauf der Teilwiderstände $R_{xx}$ überlagert. Wenn nunmehr die Teilwiderstände $R_{xx}$ entsprechend ihrer bekannten Nichtlinearität infolge der angreifenden mechanischen Spannung (Druck) derart ausgewählt werden, daß sich eine absichtliche definierte Verstimmung der Schaltungsanordnung ergibt, kann hierdurch die Nichtlinearität kompensiert, zumindest die maximal auftretende Nichtlinearität minimiert werden.

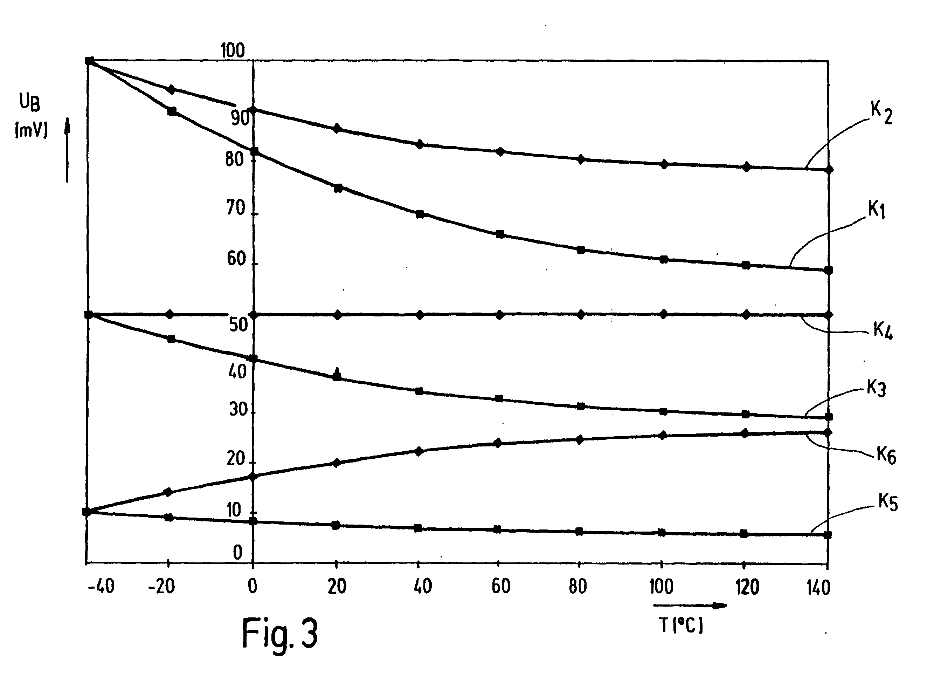

In Figur 3 sind hierzu beispielhaft Kennlinienpaare aufgezeigt, bei denen jeweils die Brückenspannung $U_B$ über der Temperatur und sich ergebende Nichtlinearitäten infolge mechanischer Spannung aufgetragen sind. Hierbei wird von einem Druck p ausgegangen, der von einem Drucksensor detektiert werden kann, der die Schaltungsanordnung 10 aufweist. Ein oberes Kennlinienpaar zeigt hierbei in einer Kennlinie $K_1$ den Verlauf bei maximalem Druck p und in einer Kennlinie $K_2$ den Verlauf der Kennlinie bei einer erfindungsgemäßen Kompensation. Ein weiteres Kennlinienpaar zeigt in einer Kennlinie $K_3$ den Verlauf der Kennlinie bei halbem Druck p und die Kennlinie $K_4$ einen kompensierten Verlauf der Kennlinie gemäß der Erfindung. Schließlich ist ein drittes Kennlinienpaar der Kennlinien $K_5$ (Kennlinie bei $^1/_{10}$ Druck p) und eine Kennlinie $K_6$ bei kompensierter Nichtlinearität gezeigt. Es wird deutlich, daß durch Wahl der Größenwerte der Teilwiderstände $R_{xx}$ bei einem mittleren anzunehmenden zu sensierenden Druck p (Kennlinie $K_5$) eine lineare Kennlinie der Brückenspannung $U_B$ über der Temperatur eingestellt werden kann.

Die Erfindung beschränkt sich selbstverständlich nicht auf das dargestellte Ausführungsbeispiel. So läßt sich die Dimensionierung der Widerstände auch auf Widerstandsnetzwerke übertragen, die aus rein metallischen Leitern (Metalldünnfilm) bestehen. In diesem Fall können durch Dotieren von metallischen Leitern Nichtlinearitäten erzeugt werden, mittels denen eine Temperaturnichtlinearität verringert beziehungsweise kompensiert werden kann. Ferner sind Widerstandsnetzwerke möglich, die in polykristallinen Materialien realisiert sind.

Figur 4 zeigt in einer schematischen Ansicht die Anordnung der Teilwiderstände $R_{x1}$, $R_{x2}$ und $R_{x3}$. $R_{x2}$ entspricht hierbei den Zuleitungen 12 zu p$^-$-dotierten Bereichen $R_{x1}$, während $R_{x3}$ p$^+$-dotierten Bereichen entspricht. Die, insbesondere aus Aluminium bestehenden Zuleitungen 12, die die Widerstände $R_{x2}$ aufweisen, sind mit dem p$^+$-do-

**EP 1 123 492 B1**

tierten Substrat kontaktiert. Eine unsymmetrische Auslegung der Brückenschaltung läßt sich dadurch erreichen, daß entsprechend dem eingezeichneten Doppelpfeil 16 wenigstens einer der Anschlüsse der Zuleitungen 12 bei der Anlegung des Layouts verschoben wird. Hierdurch ändert sich das Verhältnis der Widerstände $R_{x1}$ zu $R_{x3}$, also der p⁻-dotierten Bereiche zu den p⁺-dotierten Bereichen. Eine Verschiebung der Anschlüsse 12 entsprechend dem Doppelpfeil 16 kann durch eine Maskenprogrammierung erfolgen.

**Patentansprüche**

1. Schaltungsanordnung zur Kompensation einer Temperatunichtlinearität der Kennlinien von in einer Brückenschaltung geschalteter piezoresistiver, metallischer oder polykristalliner Widerstände, wobei

   - die Nichtlinearitäten durch Nichtlinearitäten der Widerstände, insbesondere durch auf die Brückenschaltung einwirkende physikalische Größen, wie Temperatur, Druck, Bimetalleffekte, nichtlineare Membranspannungen, hervorgerufen werden und
   - die Widerstände sich aus Teilwiderständen mit unterschiedlichen Temperaturkoeffizienten zusammensetzen, wobei

      - jeder der Teilwiderstände ein bestimmtes lineares und nichtlineares Temperaturverhalten aufweist, und
      - die Teilwiderstände ($R_{xx}$) in Reihe angeordnet sind, und

   - die Teilwiderstände ($R_{XX}$) jedes Brückenwiderstandes ($R_x$), anhand derer bekannten linearen und nichtlinearen Temperaturkennlinien derart ausgewählt werden, so dass eine unsymmetrische Auslegung der Brückenschaltung erfolgt, und
   - ein nichtlinearer Kennlinienverlauf einer Brückenausgangsspannung ($U_B$) der Schaltungsanordnung (10) im Wesentlichen kompensierbar ist, und
   - die Schaltungsanordnung mit einer temperaturabhängige Versorgungsspannung ($U_V$) betrieben wird.

2. Schaltungsanordnung nach Anspruch 1, **dadurch gekennzeichnet, dass** die Widerstandswerte der Teilwiderstände ($R_{XX}$) innerhalb des Gesamtwiderstandswertes eines Brückenwiderstandes ($R_X$) anhand ihres bekannten, unterschiedlichen Temperaturverlaufs dimensioniert werden.

3. Schaltungsanordnung nach einem der vorhergehenden Ansprüche, **dadurch gekennzeichnet, dass** die Widerstandswerte der Teilwiderstände ($R_{XX}$) so dimensioniert sind, dass innerhalb eines Brückenwiderstandes ($R_X$) Teilwiderstände ($R_{XX}$) Temperaturkennlinien mit unterschiedlichen Vorzeichen aufweisen.

4. Schaltungsanordnung nach Anspruch 3, **dadurch gekennzeichnet, dass** innerhalb eines Brückenwiderstandes ($R_X$) wenigstens ein Teilwiderstand ($R_{XX}$) eine positive Temperaturkennlinie und wenigstens ein Teilwiderstands ($R_{XX}$) eine negative Temperaturkennlinie aufweist.

5. Schaltungsanordnung nach einem der vorhergehenden Ansprüche, **dadurch gekennzeichnet, dass** die Schaltungsanordnung (10) in einer Messmembran eines mikromechanischen Drucksensors integriert ist.

6. Schaltungsanordnung nach Anspruch 5, **dadurch gekennzeichnet, dass** die Teilwiderstände ($R_{X1}$), die mit einer mechanischen Spannung (Druck) beaufschlagbar sind, in ihren Widerstandswerten derart ausgebildet sind, dass eine bekannte Nichtlinearität der Teilwiderstände ($R_{X1}$) infolge der angreifenden mechanischen Spannung eine definierte Verstimmung der Schaltungsanordnung (10) ergibt, so dass der nichtlineare Kennlinienverlauf der Brückenspannung (UB) kompensierbar ist.

**Claims**

1. Circuit arrangement for compensation for temperature non-linearity in the characteristics of piezoresistive, metallic or polycrystalline resistors which are connected in a bridge circuit, with

   - the non-linearities being caused by non-linearities of the resistances, in particular by physical variables acting on the bridge circuit, such as temperature, pressure, bimetallic effects, and non-linear membrane stresses, and
   - the resistors being composed of resistance elements with different temperature coefficients, with

- each of the resistance elements having a specific linear and non-linear temperature response, and
- the resistance elements ($R_{xx}$) being arranged in series, and

- the resistance elements ($R_{xx}$) of each bridge resistor ($R_x$), being selected on the basis of their known linear and non-linear temperature characteristics so as to achieve an asymmetric bridge circuit design, and
- capability to compensate for a non-linear characteristic profile of a bridge output voltage ($U_B$) from the circuit arrangement (10) to a substantial extent, and
- the circuit arrangement being operated with a temperature-dependent supply voltage ($U_V$).

2. Circuit arrangement according to Claim 1, **characterized in that** the resistance values of the resistance elements ($R_{xx}$) are designed to be within the total resistance value of a bridge resistor ($R_x$) on the basis of its known, different temperature profile.

3. Circuit arrangement according to one of the preceding claims, **characterized in that** the resistance values of the partial resistances ($R_{xx}$) are designed such that resistance elements ($R_{xx}$) within a bridge resistor ($R_x$) have temperature characteristics with different mathematical signs.

4. Circuit arrangement according to Claim 3, **characterized in that** at least one resistance element ($R_{xx}$) within a bridge resistor ($R_x$) has a positive temperature characteristic, and at least one resistance element ($R_{xx}$) has a negative temperature characteristic.

5. Circuit arrangement according to one of the preceding claims, **characterized in that** the circuit arrangement (10) is integrated in a measurement membrane of a micromechanical pressure sensor.

6. Circuit arrangement according to Claim 5, **characterized in that** the resistance elements ($R_{x1}$) to which a mechanical stress (pressure) can be applied have resistance values designed such that a known non-linearity of the resistance elements ($R_{x1}$) as a result of the applied mechanical stress produces defined detuning of the circuit arrangement (10), so that the non-linear characteristic profile of the bridge voltage (UB) can be compensated for.

**Revendications**

1. Circuit de compensation d'une non-linéarité de température des caractéristiques de résistances de mesure piézorésistives, métalliques ou polycristallines montées en pont,
dans lequel

- les non-linéarités sont formées par des non-linéarités des résistances, notamment par des grandeurs physiques ayant des répercussions sur le circuit en pont, comme la température, la pression, les effets bimétalliques, les tensions non-linéaires de la membrane,
- les résistances se composent de résistances partielles à différents coefficients de température, chacune des résistances partielles présentant un certain comportement linéaire ou non en température, et les résistances partielles ($R_{xx}$) étant disposées en rangée,
- les résistances partielles ($R_{xx}$) de chaque résistance en pont ($R_x$) sont sélectionnées à l'aide de caractéristiques de température linéaires et non-linéaires de manière à ce qu'il en résulte une disposition asymétrique du circuit en pont,
- une courbe non-linéaire de la caractéristique d'une tension de sortie en pont ($U_B$) du circuit (10) est compensée pour l'essentiel, et
- le circuit fonctionne avec une tension d'alimentation ($U_V$) dépendant de la température.

2. Circuit selon la revendication 1,
**caractérisé en ce que**
les valeurs de résistance des résistances partielles (Rxx) sont dimensionnées dans le cadre d'une valeur de résistance totale d'une résistance en pont ($R_x$) à l'aide de leurs différentes courbes de température connues.

3. Circuit selon l'une quelconque des revendications précédentes,
**caractérisé en ce que**
les valeurs de résistance des résistances partielles ($R_{xx}$) sont dimensionnées de manière à ce que des résistances partielles ($R_{xx}$) comportent des caractéristiques de température avec différents signes dans le cadre d'une résis-

tance en pont ($R_x$).

4. Circuit selon la revendication 3,
   **caractérisé en ce qu'**
   au moins une résistance partielle ($R_{xx}$) comporte une caractéristique positive de température et qu'au moins une résistance partielle ($R_{xx}$) comporte une caractéristique négative de température dans le cadre d'une résistance en pont ($R_x$).

5. Circuit selon l'une quelconque des revendications précédentes,
   **caractérisé en ce que**
   le circuit (10) est intégré dans une membrane de mesure d'un capteur de pression micromécanique.

6. Circuit selon la revendication 5,
   **caractérisé en ce que**
   les résistances partielles ($R_{x1}$) qui peuvent être alimentées par une tension mécanique (pression) sont formées dans leurs valeurs de résistance de manière à ce qu'une non-linéarité connue des résistances partielles ($R_{x1}$) donnent un désaccord défini des fréquences du circuit (10) suite à la tension mécanique appliquée, de sorte que la courbe non-linéaire caractéristique de la tension en pont (UB) est compensée.

Fig.1

Fig.4

Fig. 2a

Fig. 2b

Fig. 3

EP 1 123 492 B1